(19) Europäisches Patentamt
European Patent Office
Office européen des brevets

(11) Veröffentlichungsnummer : **0 335 197 B1**

(12) # EUROPÄISCHE PATENTSCHRIFT

(45) Veröffentlichungstag der Patentschrift : **12.08.92 Patentblatt 92/33**

(51) Int. Cl.$^5$ : **C08G 18/28,** C08G 18/72, C08G 18/32, B01F 17/00, C09B 67/46

(21) Anmeldenummer : **89104759.9**

(22) Anmeldetag : **17.03.89**

(54) **Neue Polyisocyanat-Polyadditionsverbindungen, Verfahren zu deren Herstellung und deren Verwendung zur Dispergierung von Feststoffen.**

Die Akte enthält technische Angaben, die nach dem Eingang der Anmeldung eingereicht wurden und die nicht in dieserPatentschrift enthalten sind.

(30) Priorität : **30.03.88 DE 3810781**

(43) Veröffentlichungstag der Anmeldung : **04.10.89 Patentblatt 89/40**

(45) Bekanntmachung des Hinweises auf die Patenterteilung : **12.08.92 Patentblatt 92/33**

(84) Benannte Vertragsstaaten : **AT BE DE FR GB IT NL SE**

(56) Entgegenhaltungen :
**EP-A- 0 154 678**
**EP-A- 0 194 349**
**EP-A- 0 270 126**

(73) Patentinhaber : **BAYER AG**
**W-5090 Leverkusen 1 Bayerwerk (DE)**

(72) Erfinder : **Mazanek, Jan, Dr.**
**Haferkamp 2**
**W-5000 Köln 80 (DE)**
Erfinder : **von Gizycki, Ulrich, Dr.**
**Wiembachallee 24**
**W-5090 Leverkusen 3 (DE)**
Erfinder : **Müller, Hanns Peter, Dr.**
**Weizenfeld 36**
**W-5060 Bergisch-Gladbach 2 (DE)**
Erfinder : **Wienkenhöver, Martin, Dr.**
**c/o Mobay Corporation P.O. Box 10288**
**Charleston South Carolina 29411 (US)**
Erfinder : **Wieser, Karl-Heinz, Dr.**
**Flotowstrasse 13**
**W-5090 Leverkusen 1 (DE)**
Erfinder : **Paulat, Volker, Dr.**
**Menzelweg 1**
**W-4019 Monheim (DE)**
Erfinder : **Theuer, Werner, Dr.**
**Am Gierlichshof 15**
**W-5090 Leverkusen 3 (DE)**
Erfinder : **Müller, Walter, Dipl.-Ing.**
**Pfarrer-Klein-Strasse 3**
**W-5090 Leverkusen 3 (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft Polyisocyanat-Polyadditionsverbindungen, die als Netz- oder Dispergiermittel für die Einarbeitung von Feststoffen, insbesondere von Pigmenten, in Lack- oder Kunststofformulierungen verwendet werden können. Die vorliegende Erfindung betrifft weiterhin ein Verfahren zur Herstellung dieser Polyisocyanat-Polyadditionsverbindungen, sowie deren Verwendung zur Dispergierung von Feststoffen in Lack-und/oder Kunststofformulierungen, sowie zur Oberflächenmodifizierung von Feststoffen vor deren Einarbeitung in Dispersionen.

Um Pigmente in Lacksystemen zu dispergieren sind hohe Scherkräfte nötig, damit die vorhandenen Pigmentaggregationen abgebaut und die primären Pigmentteilchen in der Dispersion möglichst monodispers vorliegen. Dieser Dispergiervorgang ist in hohem Maße von der Benetzbarkeit des Pigments durch das entsprechende Lacksystem und der Affinität zu diesem Lacksystem abhängig.

Pigmentierte Lacksysteme müssen stabil sein, d.h. sie dürfen nicht wieder reagglomerieren. Eine Reagglomeration des fein verteilten Pigments führt zur Verschlechterung des coloristischen Bildes, zu Glanz- und Viskositätsproblemen und zu ungenügender Farbkraftentwicklung in Lacken und Beschichtungen.

Es sind bereits Dispergiermittel bekannt, die aus Polyisocyanaten durch Reaktion mit zu den NCO-Gruppen äquivalenten Mengen mono- und polyfunktionellen Hydroxylgruppen enthaltenden Polyethern und -estern und tertiären Aminen hergestellt wurden (siehe z.B. EP-OS 154 678 und DE-OS 3 542 437). In der EP-OS 154 678 wird ausdrücklich darauf hingewiesen, daß eine Übervernetzung bzw. der Einsatz einer unteräquivalenten Menge an mono-und polyfunktionellen Hydroxylgruppen enthaltendne Polyethern und -estern und tertiären Aminen zu vermeiden ist (siehe Seite 12, Zeilen 11 bis 15 und 28 bis 29).

Die Art und Menge des Dispergiermittels muß jeweils spezifisch für das verwendete Pigment-/Lacksystem empirisch ermittelt werden, um ein optimales Ergebnis zu erreichen (siehe EP-OS 154 678, Seite 14, Zeilen 16 bis 20). Mit diesen, von den erfindungsgemäßen Dispergiermitteln abweichenden Dispergiermitteln wird nicht generell bei allen Pigmenten und allen Lacksystemen ein positiver Effekt gefunden. In einer ganzen Reihe von Fällen wird keine Verbesserung erreicht oder der gegenteilige Effekt beobachtet. Dies ist ein grundsätzlicher Nachteil, da bei der Lackherstellung meistens Pigmentmischungen eingesetzt werden. In diesen Fällen sind dann häufig die einzelnen Pigmentkomponenten unterschiedlich gut dispergiert.

Es wurden nun Polyisocyanat-Polyadditionsverbindungen gefunden, die dadurch gekennzeichnet sind, daß sie erhältlich sind, indem man Polyisocyanate mit 3 bis 8 NCO-Gruppen pro Molekül umsetzt mit

A) 5 bis 60 Äquivalent-% (bezogen auf die NCO-Gruppen der eingesetzten Polyisocyanate) einer oder mehrerer Verbindungen der Formeln

$$R_1 \leftarrow\!\!\!\!-\, AO \,-\!\!\!\!\rightarrow_x X \qquad (I)$$

und/oder

$$R_1\text{-}R_2\text{-}X \qquad (II),$$

in denen

$R_1$ für einen gegebenenfalls substituierten aliphatischen Rest mit 1 bis 60 C-Atomen, einen gegebenenfalls substituierten aromatischen oder araliphatischen Rest mit 6 bis 60 C-Atomen und/oder den Rest einer Carbonsäure, eines Carbonsäureamids oder eines Sulfonamids, jeweils mit 1 bis 60 C-Atomen,

AO für einen Alkylenoxidrest mit 2 bis 22 C-Atomen,

x für eine Zahl von 2 bis 100,

X für eine HO-, HS-, $H_2N$- oder HRN-Gruppe mit R = $C_1$-$C_6$-Alkyl und

$R_2$ für einen aliphatischen Polyesterrest mit einem Molekulargewicht im Bereich 200 bis 10 000 stehen,

B) 20 bis 80 Äquivalent-% (bezogen auf die NCO-Gruppen der eingesetzten Polyisocyanate) eines tertiären Amins mit 3 bis 20 C-Atomen, das zusätzlich eine HO-, HS-, $H_2N$- oder HRN-Gruppe mit R = $C_1$-$C_6$-Alkyl enthält und

C) gegebenenfalls weitere Komponenten,

i) 0 bis 40 Äquivalent-% (bezogen auf die NCO-Gruppen der eingesetzten Polyisocyanate) einer oder mehrerer Verbindungen der Formel

$$X - R_3 - X \qquad (III)$$

in der

$R_3$ für einen Rest steht, der sich formell durch Abtrennen der beiden endständigen OH-Gruppen aus einem bifunktionellen Polyether oder Polyester mit einem Molekulargewicht im Bereich 200 bis 10 000 ergibt und

X unabhängig voneinander und unabhängig von der Bedeutung von X in den Formeln (I) und

(II) je für eine HO-, HS-, $H_2N$- oder HRN-Gruppe mit R = $C_1$-$C_6$-Alkyl steht,
und/oder
ii) 0 bis 30 Äquivalent-% (bezogen auf die NCO-Gruppen der eingesetzten Polyisocyanate) einer monofunktionellen Carbonsäure mit 2 bis 40 C-Atomen
und/oder
iii) 0 bis 50 Äquivalent-% (bezogen auf die NCO-Gruppen der eingesetzten Polyisocyanate) einer polyfunktionellen Verbindung der Formel

$$R_4\text{-}(X)_y \qquad (IV),$$

in der
R₄ für einen Rest steht, der sich formell durch Abtrennen von y HO-Gruppen aus einem mindestens y HO-Gruppen enthaltenden Polyether-, Polyester- oder Polyacrylatpolyol mit einem Molekulargewicht im Bereich 176 bis 200 000 ableitet,
X unabhängig voneinander und unabhängig von der Bedeutung von X in den Formeln (I), (II) und (III) für je eine HO-, HS-, $H_2N$- oder HRN-Gruppe mit R = $C_1$-$C_6$-Alkyl und
y für eine Zahl von 3 bis 20 steht,
und/oder
iv) 0,0001 bis 10 Gew.-% (bezogen auf die Gesamtmenge der eingesetzten Verbindungen mit gegenüber NCO-Gruppen reaktiven Wasserstoffatomen) eines oder mehrerer Katalysatoren
und/oder
v) Lösungsmittel,
wobei die Summe A) + B) + $C_i$) + $C_{ii}$) 40 bis 98 Äquivalent-% und die Summe A) + B) + $C_i$) + $C_{ii}$) + $C_{iii}$) 50 bis 98 Äquivalent-% (jeweils bezogen auf) die NCO-Gruppen der eingesetzten Polyisocyanate) beträgt.

Bevorzugte erfindungsgemäße Polyisocyanat-Polyadditions-verbindungen sind erhältlich, indem man folgende Mengen der zuvor angegebenen Komponenten einsetzt, wobei nur einer, mehrere, aber auch alle dieser bevorzugten Mengenbereiche gleichzeitig zur Anwendung kommen können (die Äquivalent-% beziehen sich, sofern nichts anderes angegeben ist, jeweils auf die NCO-Gruppen der eingesetzten Polyisocyanate):

Komponente A) 10 bis 50, insbesondere 15 bis 35 Äquivalent-%. Vorzugsweise wird entweder eine Verbindung der Formel (I) oder eine Verbindung der Formel (II) eingesetzt oder ein Gemisch aus einer Verbindung der Formel (I) mit einer Verbindung der Formel (II), wobei die Komponenten im Molverhältnis 9:1 bis 1:9, vorzugsweise 7:3 bis 3:7 vorliegen.

Komponente B) 20 bis 75, insbesondere 30 bis 60 Äquivalent-%.

Komponente $C_i$) 0 bis 40, insbesondere 5 bis 30 Äquivalent-%.

Komponente $C_{ii}$) 0 bis 30, insbesondere 0 bis 15 Äquivalent-%.

Komponente $C_{iii}$) 0 bis 40, insbesondere 0 bis 20 Äquivalent-%.

Komponente $C_{iv}$) 0,0005 bis 5, insbesondere 0,001 bis 3 Gew.-% (bezogen auf die Gesamtmenge der eingesetzten Verbindungen mit gegenüber NCO-Gruppen reaktiven Wasserstoffatomen).

Vorzugsweise beträgt die Summe von A) + B) + $C_i$) + $C_{ii}$) + $C_{iii}$) 50 bis 90, insbesondere 60 bis 80 Äquivalent-%.

Als Polyisocyanate mit 3 bis 8 NCO-Gruppen pro Molekül können alle derartigen Polyisocyanate eingesetzt werden.

Besonders geeignet sind Polyisocyanate, die aus Mono-und/oder Diisocyanaten durch Trimerisierungs-, Biuretisierungs- oder Allophanatisierungsreaktionen nach an sich bekannten Verfahren zugänglich sind. Besonders geeignet sind auch Isocyanate mit 3 bis 8 NCO-Gruppen pro Molekül, die durch die Umsetzung von Mono- und Diisocyanaten mit Polyhydroxylverbindungen erhältlich sind.

Soweit die im folgenden beschriebenen Polyisocyanate 3 bis 8 NCO-Gruppen pro Molekül aufweisen, sind sie direkt zur Herstellung erfindungsgemäßer Additionsverbindungen geeignet. Gegebenenfalls können aus allen im folgenden beschriebenen Polyisocyanaten durch die zuvor angegebenen Umsetzungen zur Herstellung erfindungsgemäßer Polyadditionsverbindungen (= Trimerisierungs-, Biuretisierungs- oder Allophanatisierungsreaktionen) geeignete Polyisocyanate erhalten werden. Bei den Polyisocyanaten kann es sich um aliphatische, cycloaliphatische, araliphatische, aromatische oder heterocyclische Typen handeln, wie sie z.B. von W. Siefken in Justus Liebigs Annalen der Chemie, 562, Seiten 75 bis 136, beschrieben werden, beispielsweise um solche der Formel

$$Q(NCO)_n$$

in der
n für eine Zahl von 2 bis 4, vorzugsweise für 2,0 bis 3,0 und
Q für einen aliphatischen Kohlenwasserstoffrest mit 2 bis 18, vorzugsweise 6 bis 10 C-Atomen oder für einen cycloaliphatischen Kohlenwasserstoffrest mit 4 bis 15, vorzugsweise 5 bis 10 C-Atomen oder für einen

aromatischen Kohlenwasserstoffrest mit 6 bis 20, vorzugsweise 6 bis 13 C-Atomen oder für einen araliphatischen Kohlenwasserstoffrest mit 8 bis 15, vorzugsweise 8 bis 13 C-Atomen
steht.

Beispiele für derartige Polyisocyanate sind Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (siehe DE-AS 1 202 785 und US-PS 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4′- und/oder -4,4′-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4′- und -4,4′-diisocyanat und Naphthylen-1,5-diisocyanat.

Weiter kommen beispielsweise in Frage: Triphenylmethan-4,4′,4″-triisocyanat, Polyphenyl-polymethylenpolyisocyanate, wie sie durch Anilin-Formaldehyd-Kondensation und anschließende Phosgenierung erhalten und z.B. in den GB-PS'en 874 430 und 848 671 beschrieben werden, m- und p-Isocyanatophenylsulfonyl-isocyanate (siehe z.B. US-PS 3 454 606), perchlorierte Arylpolyisocyanate (siehe z.B. DE-AS 1 157 601 und US-PS 3 277 138), Carbodiimidgruppen aufweisende Polyisocyanate (siehe z.B. DE-PS 1 092 007 und US-PS 3 152 162), Norbornandiisocyanate (siehe z.B. US-PS 3 492 330), Allophanatgruppen aufweisende Polyisocyanate (siehe z.B. GB-PS 994 890, BE-PS 761 626 und NL-Patentanmeldung 7 102 524), Isocyanuratgruppen aufweisende Polyisocyanate (siehe z.B. US-PS 3 001 973 und DE-PS'en 1 022 789, 1 222 067 und 1 027 694 sowie DE-OS'en 1 929 034 und 2 004 048), Urethangruppen aufweisende Polyisocyanate (siehe z.B. BE-PS 752 261 und US-PS'en 3 394 164 und 3 644 457), acylierte Harnstoffgruppen aufweisende Polyisocyanate (siehe z.B. DE-PS 1 230 778), Biuretgruppen aufweisende Polyisocyanate (siehe z.B. US-PS'en 3 201 372 und 3 124 605 sowie GB-PS 889 050), durch Telomerisationsreaktionen hergestellte Polyisocyanate (siehe z.B. US-PS 3 654 106), Estergruppen aufweisende Polyisocyanate (siehe z.B. GB-PS'en 965 474 und 1 072 956 sowie US-PS 3 567 763 und DE-PS 1 231 688), Umsetzungsprodukte der obengenannten Isocyanate mit Acetalen (siehe z.B. DE-PS 1 072 385) und polymere Fettsäureester enthaltende Polyisocyanate (siehe z.B. US-PS 3 455 883).

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden die technisch leicht zugänglichen Polyisocyanate verwendet, z.B. das 2,4- und/oder 2,6-Toluylendiisocyanat sowie beliebige Gemische dieser Isomeren ("TDI"), Hexamethylendiisocyanat, Polyphenyl-polymethylen-polyisocyanate wie sie durch Anilin-Formaldehyd-Kondensation und anschließende Phosgenierung hergestellt werden ("rohres MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich von 2,4- und/oder 2,6-Toluylendiisocyanat und vom 4,4′und/oder 2,4′-Diphenylmethandiisocyanat ableiten.

Die Polyisocyanate A) können in freier oder teilweise verkappter Form zum Einsatz gelangen. Zur Verkappung kommen beispielsweise Phenole, Säureamide, insbesondere Caprolactam, Oxime und Enolverbindungen in Frage.

Bei den Verbindungen der Formeln (I) und (II) handelt es sich vorzugsweise um Monohydroxyverbindungen (X = H). Im wesentlichen kommen als Verbindungen der Formel (I) Alkoxylate und Ester von Alkoholen, Phenolen, Carbonsäuren, Carbonsäureamiden, sekundären Aminen und Sulfonamiden in Frage.

Als Alkoholkomponente eignen sich hierbei z.B. gesättigte und ungesättigte, aliphatische, cycloaliphatische und araliphatische Hydroxyverbindungen mit beispielsweise 1 bis 30 C-Atomen. Vorzugsweise enthalten die Alkohole 8 bis 25 C-Atome und liegen rein oder in Form von Gemischen vor, wie sie beispielsweise durch die Reduktion von Fettsäuren oder Fettsäureestern aus pflanzlichen Ölen, beispielsweise Kokosnuß-, Erdnuß-, Palm-, Soja-, Leinsamen-, Mais- oder Rizinusöl, oder aus tierischen Ölen und Fetten, beispielsweise Fischöl, Walöl, Talg oder Schweineschmalz, durch Oxosynthese, durch das Zieglerverfahren oder durch Paraffinoxidation zugänglich sind. Als Beispiele seien genannt: 1-Octanol, Isooctanol, 2-Ethyl-1-hexanol, 2-Ethyl-4-methylpentanol-(1), 2,2-Dimethyl-1-hexanol, 1-Nonanol, 2,4,4-und 3,5,5-Trimethyl-1-hexanol und Gemische dieser Isomeren, 1-Decanol, 1-Dodecanol, Isododecanol, Isotridecanol, 1-Tetradecanol, 1-Hexadecanol, Isohexadecanol, 1-Octadecanol, Isooctadecanol, 3,3,5-Trimethylcyclohexanol, 4-tert.-Butyl-cyclohexanol, 2-Hydroxydecalin, 1,7,7-Trimethylnorbornanol-(2), Oleylalkohol, Eikosenylalkohol, Benzylalkohol, 1- und 2-Phenylethanol und 2-Phenyl-1-propanol. Auch teil- und perfluorierte Alkohole wie Heptadecafluordodecanol oder Tridecafluoroctanol können eingesetzt werden.

Als Phenolkomponente eignen sich hierbei beispielsweise Phenol, mono- und polyhalogenierte Phenole, Naphthole, 2- und 4-Hydroxydiphenyl, 3-Benzyl-4-hydroxydiphenyl, mit 1 bis 15 C-Atomen alkylierte Phenole,

z.B. Kresole, Ethylphenole sowie mit 6 bis 15 C-Atomen alkylierte Phenole, beispielsweise Isooctylphenol, Nonylphenole und Dodecylphenole und mit 8 bis 36 C-Atomen aralkylierte Phenole.

Als alkoxylierbare Säuren sind gesättigte und ungesättigte aliphatische Carbonsäuren mit beispielsweise 1 bis 30 C-Atomen geeignet. Bevorzugt sind solche mit 10 bis 22 C-Atomen, wie Caprin-, Laurin-, Palmitin-, Stearin-, Behenyl-, Rizinol-, Rizinen-, Linol- und Linolensäure. Geeignet sind auch Gemische gesättigter und/oder ungesättigter aliphatischer Carbonsäuren wie sie bei der Paraffinoxidation und der Oxosynthese anfallen oder durch die Verseifung pflanzlicher oder tierischer Fette erhalten werden. Ferner können zur Alkoxylierung cycloaliphatische und aromatische Carbonsäuren eingesetzt werden, vorzugsweise solche mit 10 bis 22 C-Atomen, beispielsweise Cyclohexancarbonsäure, Abietinsäure, tert.-Butylbenzoesäure und p-Nonylbenzoesäure.

Für die Alkoxylierung können auch Säureamide verwendet werden, beispielsweise die Amide der oben beschriebenen Carbonsäuren und die entsprechenden Alkylsulfonamide.

Zur Herstellung von Alkoxylaten der Formel (I) können die zu alkoxylierenden Verbindungen nach bekannten Verfahren mit Alkylenoxiden umgesetzt werden. Als Alkylenoxide kommen vorzugsweise Ethylenoxid, Propylenoxid, 1,2- und 2,3-Epoxibutan, 2,3-Epoxipentan, Styroloxid und Epichlorhydrin in Frage. Besonders bevorzugt sind Ethylenoxid und Propylenoxid.

Die Herstellung monofunktioneller Ester der Formel (II) kann beispielsweise durch die Umsetzung der zuvor beschriebenen monofunktionellen niedermolekularen Verbindungen mit cyclischen Estern erfolgen, insbesondere mit Caprolacton. Aber auch die an sich bekannte Herstellung von Hydroxycarbonsäuren oder bifunktionellen Carbonsäuren und Glykolen in Anwesenheit der zuvor beschriebenen monofunktionellen Verbindungen ist möglich.

Als Verbindungen der Formel (III) und der Formel (IV) kommen vorzugsweise solche in Frage, bei denen X für OH steht und die Molekulargewichte von 350 bis 50 000 aufweisen.

Insbesondere kommen Hydroxylgruppen aufweisende Polyester in Frage, beispielsweise Umsetzungsprodukte von mehrwertigen, vorzugsweise zwei- und/oder dreiwertigen Alkoholen mit mehrwertigen, vorzugsweise zweiwertigen, Carbonsäuren. Anstelle der freien Polycarbonsäuren kann man auch die entsprechenden Polycarbonsäureanhydride oder entsprechende Polycarbonsäureester von niederen Alkoholen oder deren Gemische zur Herstellung von Polyestern verwenden. Die Polycarbonsäuren können aliphatische, cycloaliphatische, aromatische und/oder heterocyclische Strukturen aufweisen und gegebenenfalls substituiert, z.B. durch Halogenatome, und/oder ungesättigt sein.

Insbesondere kommen als Polycarbonsäuren oder deren Derivate in Frage: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure, Terephthalsäuredimethylester und Terephthalsäurebisglykolester. Als mehrwertige Alkohole kommen z.B. Ethylenglykol, Propylengly kol-(1,2) und -(1,3), Butylenglykol-(1,4) und -(2,3), Hexandiol-(1,6), Octandiol-(1,8), Neopentylglykol, 1,4-Bishydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinnit, Mannit und Sorbit, Formit, Methylglykosid, Diethylenglykol, Trietylenglykol, Tetraethylenglykol und höhere Polyethylenglykole, Diisopropylenglykol und höhere Polypropylenglykole, Diisobutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

Es kommen auch solche Polyester in Frage, die durch (Co)Polymerisation von Hydroxylgruppen enthaltenden Vinylmonomeren entstehen, z.B. Copolymere von 2-Hydroxyethylacrylat.

Als erfindungsgemäß in Frage kommende, mindestens zwei Hydroxylgruppen aufweisende Polyether der Formeln (III) oder (IV) sind beispielsweise solche von Interesse, wie sie durch Polymerisation von Epoxiden, wie Ethylenoxid, Propylenoxid, Butylenoxid, Tetrahydrofuran, Styroloxid oder Epichlorhydrin mit sich selbst, z.B. in Gegenwart von Lewis-Katalysatoren, wie $BF_3$ oder durch Anlagerung dieser Epoxide, vorzugsweise von Ethylenoxid und/oder Propylenoxid, an Starterkomponenten mit reaktionsfähigen Wasserstoffatomen, wie Wasser, Alkohole, Ammoniak oder Amine, z.B. Ethylenglykol, Propylenglykol-(1,3) oder -(1,2), Trimethylolpropan, Glycerin, Sorbit, 4,4'-Dihydroxy-diphenylpropan, Anilin, Ethanolamin oder Ethylendiamin hergestellt werden können. Auch Succrosepolyether (siehe DE-AS'en 1 176 358 und 1 064 938) sowie auf Formit oder Formose gestartete Polyether (siehe DE-OS'en 2 639 083 und 2 737 951) kommen in Frage. Bevorzugt sind Polyether und Polyacrylatpolyole, die bis zu 90 Gew.-%, bezogen auf alle vorhandenen OH-Gruppen im Polyether, primäre OH-Gruppen aufweisen. Auch OH-Gruppen aufweisende Polybutadiene sind geeignet.

Als Polythioether der Formeln (III) oder (IV) kommen beispielsweise Kondensationsprodukte von Thiodiglykol mit sich selbst und/oder mit anderen Glykolen, Dicarbonsäuren, Formaldehyd, Aminocarbonsäuren und Aminoalkoholen in Frage. Je nach den Co-Komponenten handelt es sich dann um Polythiomischether, Polythioetherester oder Polythioetheresteramide.

Auch Polyhydroxylverbindungen, die bereits Urethan- oder Harnstoffgruppen enthalten, sowie gegebenenfalls modifizierte natürliche Polyole, wie Rizinusöl oder Kohlehydrate, z.B. Stärke, sind verwendbar. Auch Anlagerungsprodukte von Alkylenoxiden an Phenol-Formaldehyd-Harze oder an Harnstoff-Formaldehyd-Harze sind einsetzbar.

Die genannten Polyhydroxylverbindungen können gegebenenfalls vor ihrer Verwendung zur Herstellung erfindungsgemäßer Polyisocyanat-Polyadditionsprodukte in verschiedenster Weise modifiziert werden. Beispielsweise läßt sich gemäß den DE-OS'en 2 210 893 und 2 544 195, sowie der US-PS 3 849 515 ein Gemisch aus verschiedenen Polyhydroxylverbindungen (beispielsweise aus einem Polyether- und einem Polyesterpolyol) durch Veretherung in Gegenwart einer starken Säure ein höhermolekulares Polyol herstellen, welches aus über Etherbrücken verbundenen, verschiedenen Segmenten aufgebaut ist. Es ist auch möglich (siehe DE-OS 2 559 372) in die Polyhydroxylverbindungen Amidgruppen oder durch Umsetzung mit polyfunktionellen Cyansäureestern Triazingruppen (siehe DE-OS 2 620 487) einzuführen. Durch Umsetzung eines Polyols mit einer weniger als äquivalenten Menge eines Diisocyanatocarbodiimids und anschließender Reaktion der Carbodiimidgruppe(n) mit einem Amin, Amid, Phosphit oder einer Carbonsäure kann man Guanidin-, Phosphonoformamidin- oder Acylharnstoffgruppen aufweisende Polyhydroxylverbindungen erhalten (siehe DE-OS'en 2 714 289, 2 714 292 und 2 714 293). Es können auch die höhermolekularen Polyhydroxylverbindungen eingesetzt werden, die durch Reaktion mit Isatosäureanhydrid vollständig oder teilweise in die entsprechenden Anthranilsäureester übergeführt worden sind (siehe beispielsweise DE-OS'en 2 019 438 und 2 619 840, und die US-PS'en 3 808 250, 3 975 428 und 4 016 143). Man erhält auf diese Weise höhermolekulare Verbindungen mit endständigen aromatischen Aminogruppen.

In manchen Fällen ist es vorteilhaft, niedrigschmelzende und hochschmelzende Polyhydroxylverbindungen miteinander zu kombinieren (siehe DE-OS 2 706 297).

Als Verbindungen des Typs $C_{ii}$) kommen gesättigte und ungesättigte aliphatische Carbonsäuren mit beispielsweise 2 bis 30, vorzugsweise 10 bis 22 C-Atomen in Frage, beispielsweise Capron-, Laurin-, Palmitin-, Stearin-, Behen-, Rizinol-, Rizinen-, Linol- oder Linolensäure, oder Gemische gesättigter und/oder ungesättigter aliphatischer Carbonsäuren, wie sie bei der Paraffinoxidation oder der Oxosynthese anfallen oder wie sie durch Verseifung pflanzlicher oder tierischer Fette erhalten werden können. Ferner können cycloaliphatische und aromatische Carbonsäuren, vorzugsweise solche mit 16 bis 22 C-Atomen eingesetzt werden, beispielsweise Cyclohexancarbonsäure, Abietinsäure, tert.-Butylbenzoesäure und p-Nonylbenzoesäure. Als Verbindungen des Typs $C_{ii}$) kommen auch endständige Carboxylgruppen enthaltende monofunktionelle Polyester und Umsetzungsprodukte von Verbindungen der Formel (I) mit cyclischen Anhydriden wie Maleinsäureanhydrid, Phthalsäureanhydrid oder Hexahydrophthalsäureanhydrid in Frage.

Bei den Verbindungen des Typs B) können beispielsweise gegebenenfalls substituierte heterocyclische oder aliphatische oder gegebenenfalls substituierte aromatische Verbindungen verwendet werden. Als Heterocyclen können beispielsweise Imidazol, Morpholin, Piperazin, Triazol, Pyrimidin, Pyridin und Benzimidazol eingesetzt werden. Insbesondere Amino- und/oder Hydroxylgruppen enthaltende Heterocyclen sind geeignet, wie z.B. 4-(2-Hydroxyethyl)-pyridin, 4-(2-Aminoethyl)-pyridin, 1-(3-Aminopropyl)imidazol, 1-(2-Hydroxyethylimidazol), 2-Hydroxyethylmorpholin und 2-Aminoethylpiperazin. Als aliphatische, tertiären Stickstoff enthaltende Verbindungen kommen insbesondere in Frage: N,N-Dimethyl-1,3-propandiamin, N,N-Diethyl-1,4-butandiamin, 2,2-Dimethylaminoethanol.

Bei den Katalysatoren (= Verbindungen des Typs $C_{iv}$)) kann es sich beispielsweise um tertiäre Amine, wie Triethylamin, Tributylamin, N-Methyl-morpholin, N-Ethylmorpholin, N,N,N',N'-Tetramethylethylendiamin, Pentamethyl-diethylentriamin und höhere Homologe handeln, sowie um 1,4-Diazabicyclo(2,2,2)-octan, N-Methyl-N'-dimethylaminoethylpiperazin, Bis-(dimethylaminoalkyl)-piperazin, N,N-Dimethylbenzylamin, N,N-Dimethylcyclohexylamin, N,N-Dimethylbenzylamin, Bis-(N,N-diethylaminoethyl)-adipat, N,N,N',N'-Tetramethyl-1,3-butandiamin, N,N-Dimethyl-β-phenylethylamin, 1,2-Dimethylimidazol, 2-Methylimidazol, monocyclische und bicyclische Amidine (siehe DE-OS 1 720 633), Bis-(dialkylamino)-alkylether (siehe US-PS 3 330 782, DE-AS 1 030 558, DE-OS 1 804 461 und DE-OS 2 618 280), sowie Amidgruppen, vorzugsweise Formamidgruppen aufweisende tertiäre Amine wie sie in den DE-OS'en 2 523 633 und 2 732 292 beschrieben sind. Als Katalysatoren kommen auch Mannichbasen aus sekundären Aminen, wie Dimethylamin, und Aldehyden, vorzugsweise Formaldehyd, oder Ketonen, vorzugsweise Aceton, Methylethylketon oder Cyclohexanol und Phenolen, wie Phenol, Nonylphenol oder Bisphenol, in Frage. Als Katalysatoren kommen auch Silaamine mit Kohlenstoff-Silizium-Verbindungen in Frage, wie sie beispielsweise in DE-PS 1 229 292 (= US-PS 3 620 984) beschrieben sind. Als Beispiele seien genannt: 2,2,4-Trimethyl-2-silamorpholin und 1,3-Diethylaminomethyl-tetramethyl-disiloxan.

Bei den Katalysatoren kann es sich auch um stickstoffhaltige Basen handeln, wie Tetraalkylammoniumhydroxide, um Alkalihydroxide, beispielsweise Natriumhydroxid oder Kaliumhydroxid, um Alkaliphenolate, wie Natriumphenolat oder um Alkalialkoholate wie Natriummethylat handeln. Auch Hexahydrotriazine können als Katalysatoren eingesetzt werden.

Ebenfalls katalytisch wirksame sind Lactame und Azalactame, wobei sich im allgemeinen zunächst ein Assiozat zwischen dem Lactam und der Verbindung mit reaktionsfähigem Wasserstoff ausbildet. Derartige Assoziate und ihre katalytischen Wirkungen werden allgemein in den DE-OS'en 2 062 288, 2 062 289, 2 117 576 (= US-PS 3 758 444), 2 129 198, 2 330 175 und 2 330 211 beschrieben. Weitere geeignete Katalysatoren sind organische Metallverbindungen, insbesondere organische Zinnverbindungen, beispielsweise Di-n-octyl-zinnmercaptid und Zinn(II)-Salze von Carbonsäuren, beispielsweise Zinnacetat, Zinnoctoat, Zinnethylhexoat und Zinnlaurat. Auch Zinn(IV)-Verbindungen sind geeignet, beispielsweise Dibutylzinn(IV)-oxid, Dibutylzinn(IV)-dichlorid, Dibutylzinn(IV)-diacetat, Dibutylzinn(IV)-dilaurat, Dibutylzinn(IV)-maleat und Dioctylzinn(IV)-diacetat.

Die Katalysatoren können jeweils alleine oder in beliebigen Gemischen untereinander eingesetzt werden. Insbesondere von Interesse sind Kombinationen aus organischen Metallverbindungen und Amidinen, Aminopyridinen oder Hydrazopyridinen (siehe DE-OS'en 2 434 185, 2 601 082 und 2 603 834).

Weitere erfindungsgemäß zu verwendende Katalysatoren sind beispielsweise beschrieben im Kunststoff-Handbuch, Band VII, herausgegeben von Vieweg und Höchtlen, Carl-Hanser-Verlag, München 1966, Seiten 96 bis 102.

In vielen Fällen können die erfindungsgemäßen Polyisocyanat-Polyadditionsprodukte ohne Katalysatoren hergestellt werden. Es ist jedoch bevorzugt in Gegenwart von Katalysatoren zu arbeiten.

Als Lösungsmittel (= Komponente $C_v$)) kommen beispielsweise aromatische Lösungsmittel in Frage, wie Xylol oder Toluol und Estergruppen enthaltende Lösungsmittel wie Butylacetat oder Ethylacetat.

Von den Verbindungen der Formel (I) und (II) sind solche bevorzugt, bei denen der Alkylenoxidrest AO 2 bis 12, insbesondere 2 bis 3 Kohlenstoffatome aufweist, x einen Wert 2 bis 100, insbesondere von 5 bis 60 hat und der aliphatische Polyesterrest $R_2$ ein Molgewicht von 300 bis 3000, insbesondere von 600 bis 2000 aufweist.

Von den Verbindungen der Formel (III) sind solche bevorzugt, bei denen der Rest $R_3$ ein Molekulargewicht von 400 bis 5000, insbesondere von 400 bis 2000 aufweist.

Von den Verbindungen der Formel (IV) sind solche bevorzugt, bei denen y für eine Zahl zwischen 5 und 30, insbesondere zwischen 5 und 15 steht.

Die Herstellung der erfindungsgemäßen Polyisocyanat-Polyadditionsverbindungen kann beispielsweise so erfolgen, daß man die Verbindungen des Typs A), die Verbindungen des Typs B) und gegebenenfalls eine oder mehrere Verbindungen des Typs C) in den angegebenen Mengen zusammenfügt und beispielsweise bei Temperaturen im Bereich von 20 bis 250°C miteinander reagieren läßt. Vorzugsweise arbeitet man in Gegenwart von Lösungsmitteln und Katalysatoren.

Die erfindungsgemäßen Polyisocyanat-Polyadditionsverbindungen können, so wie sie nach der Herstellung anfallen, gegebenenfalls nach Abtrennung eingesetzter Lösungsmittel, als Netz- oder Dispergiermittel bei der Einarbeitung von Feststoffen, insbesondere von Pigmenten in Lack- und/oder Kunststofformulierungen oder zur Oberflächenmodifizierung von Feststoffen vor deren Einarbeitung in Dispersionen verwendet werden.

Die erfindungsgemäßen Polyisocyanat-Polyadditionsverbindungen können beispielsweise in einer Menge von 0,1 bis 20 Gew.-%, bezogen auf die zu dispergierenden Feststoffe, z.B. Pigmente oder Füllstoffe, eingesetzt werden. Vorzugsweise beträgt diese Menge 0,5 bis 10 Gew.-%. Die erfindungsgemäßen Verbindungen können entweder auf die Feststoffe vor deren Dispergierung aufgebracht werden, wobei sie deren Oberflächen modifizieren, oder direkt dem Dispergiermedium zugeführt werden und zwar vor oder gleichzeitig mit der Zugabe des Feststoffes.

Die Zugabe der erfindungsgemäßen Verbindungen in gelöster Form, z.B. zu dem Lacksystem während des Dispergiervorgangs, kann das rheologische Verhalten und die Coloristik des Lacksystems verbessern. Es ist jedoch auch möglich, daß mit möglichst lösungsmittelfreien erfindungsgemäßen Verbindungen bessere Ergebnisse erzielt werden. Es ist deshalb im allgemeinen bevorzugt, die erfindungsgemäßen Polyisocyanat-Polyadditionsverbindungen vor dem Dispergierprozeß auf die Feststoffe, im allgemeinen sind das anorganische oder organische Pigmente, aufzubringen. Dann können diese Pigmente im allgemeinen universell verwendet werden und die entsprechenden Lack- oder Polymersysteme zeigen ein optimales rheologisches und coloristisches Verhalten. Auch das Auftragen der erfindungsgemäßen Polyisocyanat-Polyadditionsverbindungen in wäßriger Phase führt zu einer festen Absorption auf Pigmentoberflächen, wodurch Wechselwirkungen mit anderen Pigmenten während der Lackherstellung und/oder mit anderen Komponenten von Polymercompounds reduziert werden können.

Lösungsmittel für erfindungsgemäße Polyisocyanat-Polyadditionsverbindungen können aus wäßrigen Systemen leicht, z.B. durch Destillation, entfernt werden. Es ist von Vorteil, solche Lösungsmittel für die Polyisocyanat-Polyadditionsverbindungen zu verwenden, die auch für das Finish des Pigmentes eingesetzt werden, z.B. in einem Temperungsschritt zur Herstellung besonders deckender Pigmente. Das Aufbringen von Polyisocyanat-Polyadditionsverbindungen auf Pigmente in wäßriger Phase ist besonders einfach wenn Lösungsmittel verwendet werden, die zumindest teilweise wasserlöslich sind.

Als Pigmente, die mit den erfindungsgemäßen Polyisocyanat-Polyadditionsverbindungen in vorteilhafter Weise in Lacksystem und/oder Kunststofformulierungen eingearbeitet werden können, kommen beispielsweise anorganische und organische Pigmente, sowie Ruße in Frage. Bei den anorganischen Pigmenten kann es sich beispielsweise um Titandioxide, Eisenoxide und Spinelle handeln. Bei den organischen Pigmenten kommen in Frage: Azopigmente, Azopigmentlacke, z.B. Pigmente der Monoazoreihe, Acetessigsäure-Derivate, Derivate der 2,3-Oxinaphtholsäure, 2,3-Oxinaphtholsäurearylamid-Derivate, Pigmente der Disazoreihe, Abkömmlinge des 3,3-Dichlorbenzidins, Diarylgelbtypen, kondensierte Disazopigmente, Metallkomplex-Pigmente, anthrachinoide Pigmente, Phthalocyaninpigmente, polycyclische Pigmente, insbesondere solche der Anthrachinon-, Thioindigo-, Chinacridon-, Dioxazin-, Pyrrolo-pyrrol-, Naphthalintetracarbonsäure-, Pterylen-, Isoamidolin(on)-, Flavanthron-, Pyranthron- oder Isoviolanthron-Reihe.

Bevorzugte Pigmente sind β- und γ-Kristallmodifikationen des unsubstituierten linearen Chinacridons sowie Mischkristalle aus 2,9-Dimethylchinacridon und unsubstituierten Chinacridonen.

Als Lacksysteme kommen beispielsweise solche auf der Basis Alkyd/Melamin, Acryl/Melamin, Acrylat/Isocyanat oder Polyester/Isocyanat in Frage. Hierbei können sowohl konventionelle Rezepturen befolgt werden als auch Vorschriften für die Herstellung von High-Solid-Lacken.

Die erfindungsgemäßen Polyisocyanat-Polyadditionsverbindungen können nicht nur zur Dispergierung von Pigmenten verwendet werden, sondern auch zur Dispergierung und Oberflächenbehandlung von beliebigen Füllstoffen, insbesondere im Zusammenhang mit deren Einarbeitung in Kunststoffe. Bei derartigen Füllstoffen kann es sich beispielsweise um Kaolin, Talkum, andere Silikate, Kreide, Glasfasern, Glasperlen, Quarz oder Metallpulver handeln, bei den Kunststoffen beispielsweise um Kautschuke, Thermoplaste oder Duroplaste. Mit den erfindungsgemäßen Hilfsstoffen werden die rheologischen Eigenschaften der gefüllten Kunststoffe und die Dispergierung solcher Füllstoffe in Kunststoffe verbessert.

Die nachfolgenden Beispiele illustrieren die vorliegende Erfindung. Die angegebenen Teile und Prozentangaben beziehen sich dabei auf das Gewicht, soweit nichts anderes vermerkt ist.

## Herstellungsbeispiele für Polyisocyanat-Polyadditions-Produkte

### Beispiel 1

Zu einer Lösung aus 262,5 g eines aus 2,4-Toluylendiisocyanat durch Trimerisierung erhaltenen Polyisocyanats mit einem mittleren NCO-Äquivalentgewicht von 262,5 und 324 g Butylacetat wurden 0,7 g Dibutylzinndilaurat unter Rühren zugegeben. Bei 80°C wurde dann eine 50°C warme Lösung aus 347 g eines monofunktionellen Polyesters aus n-Octanol und Caprolacton (OH-Zahl 31,5) und 8 g eines technischen Gemisches aus Behen- und Arachinsäure, in 1000 g Xylol unter Rühren zugegeben, 3 Std. bei 80°C gerührt und dann eine Lösung aus 77,5 g Polyethylenglykol mit einem mittleren Molgewicht von 1550 in 200 g Xylol zugegeben. Nach zweistündigem Rühren bei 80°C wurden 58,8 g 3-Dimethylaminopropylamin, gelöst in 740 g Xylol, unter Rühren zugegeben. Anschließend wurde 1 Std.

bei 80°C gerührt. Die erhaltene Lösung kann direkt als Dispergierhilfsmittel eingesetzt werden. Ihre Viskosität betrug 50 mPa.s bei 23°C.

### Beispiel 2

Es wurde wie im Beispiel 1 beschrieben gearbeitet, jedoch wurden 338 g der Polyisocyanatverbindung eingesetzt. Das erhaltene Produkt hatte eine Viskosität von 230 mPa.s bei 23°C.

### Beispiel 3

Es wurde wie im Beispiel 1 beschrieben gearbeitet, jedoch wurde als Stickstoffverbindung 1-(2-Hydroxyethyl)morpholin eingesetzt. Das Produkt wies eine Viskosität von 100 mPa.s bei 23°C auf.

### Beispiel 4

Zu einer Lösung aus 315 g eines aus 2,4-Toluylendiisocyanat durch Trimerisierung erhaltenen Polyisocyanats mit einem mittleren NCO-Äquivalentgewicht von 262,5 und 324 g Butylacetat wurden 0,7 g Dibutylzinndilaurat unter Rühren zugegeben. Bei 80° C wurde dann eine 50° C warme Lösung aus 208 g eines monofunktionellen Polyesters aus n-Octanol und Caprolacton (OH-Zahl 31,5) und 0,8 g Ölsäure, in 1000 g Xylol unter Rühren zugegeben, 3 Std. bei 80° C gerührt und dann eine Lösung aus 93 g Polyethylenglykol mit einem mittleren Molgewicht von 1550 in 200 g Xylol zugegeben. Nach zweistündigem Rühren bei 80° C wurden 61 g 3-Dimethylaminopropylamin, gelöst in 740 g Xylol, unter Rühren zugegeben. Anschließend wurde 1 Std. bei 80° C gerührt. Die erhaltene Lösung kann direkt als Dispergierhilfsmittel eingesetzt werden. Ihre Viskosität betrug 210 mPa.s bei 23° C.

Beispiel 5

Es wurde wie im Beispiel 1 beschrieben gearbeitet, jedoch mit 293 g Polyisocyanat. Es ergab sich ein Produkt mit einer Viskosität von 160 mPa.s bei 23° C.

Beispiel 6

Es wurde wie im Beispiel 2 beschrieben gearbeitet, jedoch bei 100° C. Es resultierte ein Produkt mit einer Viskosität von 180 mPa.s bei 23° C.

Beispiel 7

Es wurde wie in Beispiel 1 beschrieben gearbeitet, jedoch mit 394 g Polyisocyanat. Das erhaltene Produkt hatte eine Viskosität von 60 mPa.s bei 23° C.

Anwendungsbeispiele

Beispiel A

In einem Rührgefäß wurden 50 g eines 42 %igen Preßkuchens von γ-Chinacridon mit 3,4 g einer 25 %igen Lösung des gemäß Beispiel 1 tiergestellten Produkts in Toluol/Butylglykol und 150 ml Wasser mit einem hochtourigen Rührer miteinander vermischt, bis Homogenität erreicht war. Diese Mischung wurde bei 60°C im Umluftschrank getrocknet.

Mit diesem oberflächenbehandelten γ-Chinacridon wurden Volltonlackierungen hergestellt. Diese zeichneten sich durch einen klaren, schleierfreien Farbton und hervorragenden Glanz aus.

Die Glanzmessung erfolgte nach DIN 67 530 mit einem Erichsen-Gerät Gardner Glossard. Der Einstrahlungswinkel bei der Messung betrug 20°, der Reflektometerwert betrug 80.

Die Vergleichsfärbung war im Vollton deutlich stumpfer und matter und - wichtig bei dieser Anwendung - weniger deckend.

Beispiel B

Analog zu Beispiel A wurde das in der folgenden Tabelle 1 erwähnte Pigment belegt. Der Glanzwert wurde nach der im Beispiel A erwähnten Methode ermittelt und jeweils mit dem Glanzwert des Lackfilms, der mit dem nicht belegten Pigment hergestellt wurde, verglichen.

Tabelle 1

| Beispiel | Pigment | Gew.-Teile Pigment (Trockenbasis) | Additiv | Gew.-Teile Additiv (Feststoff-basis) | Glanzwert Beispiel | Glanzwert Vergleich |
|---|---|---|---|---|---|---|
| B | γ-Chinacridon C.I.P.V. 19 | 20 | aus Bsp. 1 | 0,8 | 79 | 64 |

Beispiel C

In einem Rührgefäß wurden 300 Teile einer wäßrigen Pigmentsuspension mit einem feststoffgehalt von 6 %. eines bereits konditionierten γ-Chinacridons mit 2,9 Teilen einer 25 %igen Lösung des Additivs, dessen Herstellung in Beispiel 2 beschrieben ist, langsam versetzt.

Die Pigmentsuspension wurde 4 Std. bei Raumtemperatur gerührt, dann wurden die Additivlösemittel mit Wasserdampf abdestilliert, das Pigment filtriert, mit Wasser gewaschen und anschließend getrocknet.

Das auf diese Weise modifizierte γ-Chinacridon zeichnete sich durch horvorragende rheologische Eigenschaften in Alkydharzen aus. Die für dieses Pigment typischen deckenden Volltoneinfärbungen zeigten einen klaren Farbton ohne Schleier sowie einen hervorragenden Glanz.

Ein Vergleichspigment, das analog - nur ohne Zusatz des Additivs hergestellt wurde, ist in der Volltonlakkierung stumpfer im Farbton, transparenter und deutlich schlechter im Glanz.

Zum Vergleich der Glanzwerte wurden die beiden Lacke wie folgt hergestellt:

15,0 g des feingemahlenen Pigments wurden in 50,0 g einer Alkydharzlösung, bestehend aus 20,0 g Alkydharz und 30,0 g Xylol, 1 h auf dem Red Devil dispergiert. Nach der Dispergierung wurden die Pigmentpasten mit einer Lösung bestehend aus

31,2 g Alkydharz
17,0 g Melaminharz
4,0 g Glykolmonobutylether
2,1 g Butylacetat
16,8 g Xylol
13,9 g Butanol

intensiv gemischt und so die pigmentierten Endlacke hergestellt. Die pigmentierten Lacke wurden auf Glas aufgetragen und 30 Min. bei 130°C eingebrannt. Die Glanzwerte wurden mit dem Erichsen Gerät Gardner Glossard unter einem Einstrahlungswinkel von 20° ermittelt:

| | |
|---|---|
| Pigment mit Additiv nach Beispiel 2 | : 82 |
| Vergleichsbeispiel | : 59 |

Beispiel D

15 g eines feingemahlenen P.V. 19 der Gamma-Modifikation wurden in 52,25 g einer Alkydharzlösung, bestehend aus 19,25 g eines Alkydharzes, 30,0 g Xylol und 3 g der Additivlösung, hergestellt nach Beispiel 2, 1 h auf dem Red Devil dispergiert.

Ein Endlack wurde nach dem Verfahren gemäß Beispiel C hergestellt. Die Volltonlackierung zeichnete sich wiederum durch einen schleierfreien Farbton sowie einen hervorragenden Glanz aus.

Die Pigmentierung des Alkydlackes wurde auch analog durchgeführt, nur ohne Zusatz des Additivs. Es wurde eine Volltonlackierung erhalten, die stumpfer und transparenter war und einen schlechteren Glanz aufwies. Die Glanzwerte für die beiden Lackierungen, ermittelt nach DIN 67 530 auf einem Erichsen Gerät Gardner Glossard, waren wie folgt:

| | |
|---|---|
| Lack mit Additiv nach Beispiel 3 | : 80 |
| Lack ohne Additiv | : 57 |

Beispiel E

15,0 g eines feingemahlenen P.V. 19 der γ-Modifikation wurden in 50,0 g einer Alkydharzlösung, bestehend aus 19,25 Teilen Alkydharz, 0,75 g des Additivs hergestellt nach Beispiel 4 und 30,0 g Xylol 1 h auf dem Red Devil dispergiert. Diese Pigmentpaste wurde mit einer Harzlösung bestehend aus

31,2 g Alkydharz
17,0 g Melaminharz
4,0 g Glykolmonobutylether
2,1 g Butylacetat
16,8 g Xylol
13,9 g Butanol

entsprechend Beispiel C homogen gemischt.

In einem Parallelversuch wurden 15,0 g des gleichen Pigments in einer Alkydharzlösung ohne Additiv, also bestehend aus 20,0 g Alkydharz und 30,0 g Xylol, dispergiert. Es wurde auf gleiche Weise daraus ein Endlack hergestellt. Die beiden so hergestellten Lacke wurden auf Glas aufgetragen und 30 Min. bei 130°C eingebrannt. Sie zeigten unterschiedliche Glanzwerte:

Lack mit Additiv : 89
Lack ohne Additiv: 64

Es wurde gemessen mit dem Gerät Gardner Glossard unter einem Einstrahlungswinkel von 20° nach DIN 67 530.

Beispiel F

15 g eines C.I. Pigments Rot 101 (C.I. No. 77491) wurden in 50 g einer Alkydharzlösung der Zusammensetzung wie in Beispiel D angegeben dispergiert. Der Endlack wurde wiederum nach dem Verfahren wie in Beispiel C hergestellt.

Die Volltonlackierung zeichnete sich durch einen hervorragenden Glanz aus. Die Glanzentwicklung war ebenfalls bereits voll entfaltet, wenn nur 2 % des Additivs (auf das Pigment bezogen) eingesetzt wurden.

## Patentansprüche

1. Polyisocyanat-Polyadditionsverbindungen, dadurch gekennzeichnet, daß sie erhältlich sind, indem man Polyisocyanate mit 3 bis 8 NCO-Gruppen pro Molekül umsetzt mit

A) 5 bis 60 Äquivalent-% (bezogen auf die NCO-Gruppen der eingesetzten Polyisocyanate) einer oder mehrerer Verbindungen der Formeln

$$R_1\text{-}(\text{-}AO\text{-})_x\text{-}X \qquad (I)$$

und/oder

$$R_1\text{-}R_2\text{-}X \qquad (II),$$

in denen

$R_1$ für einen gegebenenfalls substituierten aliphatischen Rest mit 1 bis 60 C-Atomen, einen gegebenenfalls substituierten aromatischen oder araliphatischen Rest mit 6 bis 60 C-Atomen und/oder den Rest einer Carbonsäure, eines Carbonsäureamids oder eines Sulfonamids, jedoch mit 1 bis 60 C-Atomen,

AO für einen Alkylenoxidrest mit 2 bis 22 C-Atomen,

x für eine Zahl von 2 bis 100,

X für eine HO-, HS-, $H_2N$- oder HRN-Grüppe mit

R = $C_1$-$C_6$-Alkyl und

$R_2$ für einen aliphatischen Polyesterrest mit einem Molekulargewicht im Bereich 200 bis 10 000 stehen,

B) 20 bis 80 Äquivalent-% (bezogen auf die NCO-Gruppen der eingesetzten Polyisocyanate) eines tertiären Amins mit 3 bis 20 C-Atomen, das zusätzlich eine HO-, HS-, $H_2N$- oder HRN-Gruppe mit R = $C_1$-$C_6$-Alkyl enthält und

C) gegebenenfalls weitere Komponenten,

i) 0 bis 40 Aquivalent-% (bezogen auf die NCO-Gruppen der eingesetzten Polyisocyanate) einer oder mehrerer Verbindungen der Formel

$$X - R_3 - X \qquad (III)$$

handelt,

in der

$R_3$ für einen Rest steht, der sich formell durch Abtrennen der beiden endständigen OH-Gruppen

aus einem bifunktionellen Polyether oder Polyester mit einem Molekulargewicht im Bereich 200 bis 10 000 ergibt und

X unabhängig voneinander und unabhängig von der Bedeutung von X in den Formeln (I) und (II) je für eine HO-, HS-, $H_2N$- oder HRN-Gruppe mit R = $C_1$-$C_6$-Alkyl steht,

und/oder

ii) 0 bis 30 Äquivalent-% (bezogen auf die NCO-Gruppen der eingesetzten Polyisocyanate) einer monofunktionellen Carbonsäure mit 2 bis 40 C-Atomen

und/oder

iii) 0 bis 50 Äquivalent-% (bezogen auf die NCO-Gruppender eingesetzten Polyisocyanate) einer polyfunktionellen Verbindung der Formel

$$R_4 (X)_y \qquad (IV),$$

in der

$R_4$ für einen Rest steht, der sich formell durch Abtrennen von y HO-Gruppen aus einem mindestens y HO-Gruppen enthaltenden Polyether-, Polyester- oder Polyacrylatpolyol mit einem Molekulargewicht im Bereich 176 bis 200 000 ableitet,

X unabhängig voneinander und unabhängig von der Bedeutung von X in den Formeln (I), (II) und (III) für je eine HO-, HS-, $H_2N$-oder HRN-Gruppe mit R = $C_1$-$C_6$-Alkyl und

y für eine Zahl von 3 bis 20 steht,

und/oder

iv) 0,0001 bis 10 Gew.-% (bezogen auf die Gesamtmenge der eingesetzten Verbindungen mit gegenüber NCO-Gruppen reaktiven Wasserstoffatomen) eines oder mehrerer Katalysatoren

und/oder

v) Lösungsmittel,

handelt,

wobei die Summe A) + B) + $C_i$) + $C_{ii}$) 40 bis 98 Äquivalent-% und die Summe A) + B) + $C_i$) + $C_{ii}$) + $C_{iii}$) 50 bis 98 Äquivalent-% (jeweils bezogen auf die NCO-Gruppen der eingesetzten Polyisocyanate) beträgt.

2. Verfahren zur Herstellung von Polyisocyanat-Polyadditionsverbindungen, dadurch gekennzeichnet, daß man Polyisocyanate mit 3 bis 8 NCO-Gruppen pro Molekül umsetzt mit

A) 5 bis 60 Äquivalent-%. (bezogen auf die NCO-Gruppen der eingesetzten Polyisocyanate) einer oder mehrerer Verbindungen der Formeln

$$R_1\text{-(-AO-)}_x\text{-X} \qquad \text{(I) und/oder}$$
$$R_1\text{-}R_2\text{-X} \qquad \text{(II)},$$

in denen

$R_1$ für einen gegebenenfalls substituierten aliphatischen Rest mit 1 bis 60 C-Atomen, einen gegebenenfalls substituierten aromatischen oder araliphatischen Rest mit 6 bis 60 C-Atomen und/oder den Rest einer Carbonsäure, eines Carbonsäureamids oder eines Sulfonamids, jedoch mit 1 bis 60 C-Atomen,

AO für einen Alkylenoxidrest mit 2 bis 22 C-Atomen,

x für eine Zahl von 2 bis 100,

X für eine HO-, HS-, $H_2N$- oder HRN-Gruppe mit R = $C_1$-$C_6$-Alkyl und

$R_2$ für einen aliphatischen Polyesterrest mit einem Molekulargewicht im Bereich 200 bis 10 000 stehen,

B) 20 bis 80 Äquivalent-% (bezogen auf die NCO-Gruppen der eingesetzten Polyisocyanate) eines tertiären Amins mit 3 bis 20 C-Atomen, das zusätzlich eine HO-, HS-, $H_2N$- oder HRN-Gruppe mit R = $C_1$-$C_6$-Alkyl enthält und

C) gegebenenfalls weiteren Komponenten,

wobei die Summe A) + B) 40 bis 98 Äquivalent-% (bezogen auf die NCO-Gruppen der eingesetzten Polyisocyanate) beträgt, zusammenfügt und bei Temperaturen im Bereich von 20 bis 250°C miteinander reagieren läßt.

3. Verwendung von Polyisocyanat-Polyadditionsverbindungen des Anspruchs 1 oder hergestellt nach Anspruch 2 als Netz- oder Dispergiermittel bei der Einarbeitung von Feststoffen in Lack- und/oder Kunststofformulierungen.

4. Verwendung von Polyisocyanat-Polyadditionsverbindungen des Anspruchs 1 oder hergestellt nach Anspruch 2 zur Oberflächenmodifizierung von Feststoffen vor deren Einarbeitung in Dispersionen.

5. Verwendung nach Ansprüchen 3 und 4, dadurch gekennzeichnet, daß es sich bei den Feststoffen um Pigmente oder Füllstoffe handelt und 0,1 bis 20 Gew.-% der Polyisocyanat-Polyadditionsverbindungen (bezogen auf die zu dispergierenden Feststoffe) eingesetzt werden.

## Revendications

1. Composés de polyaddition de polyisocyanates, caractérisés en ce qu'ils sont obtenus par réaction de polyisocyanates porteurs de 3 à 8 groupes NCO par molécule avec

A) 5 à 60 équivalents % (par rapport aux groupes NCO des polyisocyanates utilisés) d'un ou plusieurs composés de formules

$$R_1\text{-}(\text{-}AO\text{-})_x\text{-}X \qquad (I)$$

et/ou

$$R_1\text{-}R_2\text{-}X \ (II),$$

dans lesquelles

$R_1$ représente un reste aliphatique de 1 à 60 atomes de carbone éventuellement substitué, un reste aromatique ou araliphatique de 6 à 60 atomes de carbone éventuellement substitué et/ou le reste d'un acide carboxylique, d'un carboxamide ou d'un sulfonamide, toutefois avec 1 à 60 atomes de carbone,

AO représente un reste d'alkylène-oxyde ayant 2 à 22 atomes de carbone,

x est un nombre de 2 à 100,

X est un groupe HO-, HS-, $H_2N$- ou HRN-, avec

R = alkyle en $C_1$ à $C_6$ et

$R_2$ représente un reste de polyester aliphatique ayant un poids moléculaire compris dans la plage de 200 à 10 000,

B) 20 à 80 équivalents % (par rapport aux groupes NCO des polyisocyanates utilisés) d'une amine tertiaire de 3 à 20 atomes de carbone, qui contient en outre un groupe HO-, HS-, $H_2N$- ou HRN- avec R = alkyle en $C_1$ à $C_6$ et

C) le cas échéant, d'autres composants,

i) 0 à 40 équivalents % (par rapport aux groupes NCO des polyisocyanates utilisés) d'un ou plusieurs composés de formule

$$X - R_3 - X \qquad (III)$$

dans laquelle

$R_3$ représente un reste que l'on obtient lorsqu'on enlève les deux groupes OH terminaux de la formule d'un polyéther ou polyester difonctionnel ayant un poids moléculaire compris dans la plage de 200 à 10 000 et

les groupes X représentent, indépendamment l'un de l'autre et indépendamment de la définition de X dans les formules (I) et (II), chacun un groupe HO-, HS-, $H_2N$- ou HRN- et R = alkyle en $C_1$ à $C_6$,

et/ou

ii) 0 à 30 équivalents % (par rapport aux groupes NCO des polyisocyantes utilisés) d'un acide carboxylique monofonctionnel ayant 2 à 40 atomes de carbone

et/ou

iii) 0 à 50 équivalents % (par rapport aux groupes NCO des polyisocyanates utilisés) d'un composé polyfonctionnel de formule

$$R_4\text{-}(X)_y \qquad (IV),$$

dans laquelle

$R_4$ représente un reste qui est obtenu en enlevant y groupes HO de la formule d'un polyéther-, polyester- ou polyacrylate-polyol contenant au moins y groupes HO-, de poids moléculaire compris dans la plage de 176 à 200 000,

les groupes X représentent, indépendamment les uns des autres et indépendamment de la définition de X dans les formules (I), (II) et (III), chacun un groupe HO-, HS-, $H_2N$- ou HRN- avec R = alkyle en $C_1$ à $C_6$ et

y est un nombre de 3 à 20,

et/ou

iv) 0,0001 à 10 % en poids (par rapport à la quantité totale de composés utilisés portant des atomes d'hydrogène aptes à réagir vis-à-vis de groupes NCO) d'un ou plusieurs catalyseurs

et/ou

v) un solvant,

la somme A) + B) + $C_i$) + $C_{ii}$) s'élevant à 40-98 équivalents % et la somme A) + B) + $C_i$) + $C_{ii}$) + $C_{iii}$) s'élevant à 50-98 équivalents % (dans chaque cas par rapport aux groupes NCO des polyisocyanates utilisés.

2. Procédé de production de composés de polyaddition de polyisocyanates, caractérisé en ce qu'on fait réagir des polyisocyanates portant 3 à 8 groupes NCO par molécule avec

A) 5 à 60 équivalents % (par rapport aux groupes NCO des polyisocyanates utilisés) d'un ou plusieurs composés de formules

$$R_1\text{-}(\text{-AO-})_x\text{-}X \qquad (I)$$

et/ou

$$R_1\text{-}R_2\text{-}X \qquad (II),$$

dans lesquelles

$R_1$ représente un reste aliphatique de 1 à 60 atomes de carbone éventuellement substitué, un reste aromatique ou araliphatique de 6 à 60 atomes de carbone éventuellement substitué et/ou le reste d'un acide carboxylique, d'un carboxamide ou d'un sulfonamide, toutefois avec 1 à 60 atomes de carbone,

AO représente un reste alkylène-oxyde ayant 2 à 22 atomes de carbone,

x est un nombre de 2 à 100,

X est un groupe HO-, HS-, $H_1N$- ou HRN-, avec

R = alkyle en $C_1$ à $C_6$ et

$R_2$ est un reste de polyester aliphatique ayant un poids moléculaire compris dans la plage de 200 à 10 000,

B) 20 à 80 équivalents % (par rapport aux groupes NCO des polyisocyanates utilisés) d'une amine tertiaire de 3 à 20 atomes de carbone, qui contient en outre un groupe HO-, HS-, $H_2N$- ou HRN- avec R = alkyle en $C_1$ à $C_6$ et

C) le cas échéant, d'autres composants,

la somme A) + B) s'élevant à 40-98 équivalents % (par rapport aux groupes NCO des polyisocyanates utilisés), on les réunit et on les fait réagir ensemble à des températures comprises dans l'intervalle de 20 à 250°C.

3. Utilisation de composés de polyaddition de polyisocyanates suivant la revendication 1 ou préparés suivant la revendication 2 comme agents mouillants ou agents dispersants dans l'incorporation de matières solides dans des formulations de peintures et/ou de matières plastiques.

4. Utilisation de composés de polyaddition de polyisocyanates suivant la revendication 1 ou obtenus suivant la revendication 2 pour la modification de surface de matières solides avant leur incorporation dans des dispersions.

5. Utilisation suivant les revendications 3 et 4, caractérisée en ce que les matières solides sont des pigments ou des charges et on utilise 0,1 à 20 % en poids des composés de polyaddition de polyisocyanates (par rapport aux matières solides à disperser).

## Claims

1. Polyisocyanate polyaddition compounds, characterised in that they are obtainable by a process in which polyisocyanates having 3 to 8 NCO groups per molecule are reacted with

A) 5 to 60 equivalent % (based on the NCO groups of the polyisocyanates employed) of one or more compounds of the formulae

$$R_1\text{-}(\text{-AO-})_x\text{-}X \qquad (I)$$

and/or

$$R_1\text{-}R_2\text{-}X \ (II)$$

in which

$R_1$ represents an optionally substituted aliphatic radical having 1 to 60 C atoms, an optionally substituted aromatic or araliphatic radical having 6 to 60 C atoms and/or the radical of a carboxylic acid, a carboxylic acid amide or a sulphonamide, but having 1 to 60 C atoms,

AO represents an alkylene oxide radical having 2 to 22 C atoms,

x represents a number from 2 to 100,

X represents an SO, HS, $H_2N$ or HRN group where

R = $C_1$-$C_6$-alkyl, and

$R_2$ represents an aliphatic polyester radical having a molecular weight in the range from 200 to 10,000,

B) 20 to 80 equivalent % (based on the NCO groups of the polyisocyanates employed) of a tertiary amine having 3 to 20 C atoms, which additionally contains an HO, HS, $H_2N$ or HRN group, where R = $C_1$-$C_6$-alkyl, and

C) if appropriate further components,

i) 0 to 40 equivalent % (based on the NCO groups of the polyisocyanates employed) of one or more compounds of the formula

$$X - R_3 - X \qquad (III)$$

in which

$R_3$ represents a radical which results formally by separating off the two terminal OH groups from

a bifunctional polyether or polyester having a molecular weight in the range from 200 to 10,000 and

X independently of one another and independently of the meaning of X in the formulae (I) and (II) each represent an HO, HS, $H_2N$ or HRN group, where R = $C_1$-$C_6$-alkyl,

and/or

ii) 0 to 30 equivalent % (based on the NCO groups of the polyisocyanates employed) of a monofunctional carboxylic acid having 2 to 40 C atoms

and/or

iii) 0 to 50 equivalent % (based on the NCO groups of the polyisocyanates employed) of a polyfunctional compound of the formula

$$R_4 \{X)_y \quad (IV)$$

in which

$R_4$ represents a radical which is derived formally by separating off y HO groups from a polyether-, polyester- or polyacrylate-polyol which contains at least y HO groups and has a molecular weight in the range from 176 to 200,000,

X independently of one another and independently of the meaning of X in the formulae (I), (II) and (III) represent in each case one HO, HS, $H_2N$ or HRN group, where R = $C_1$-$C_6$-alkyl, and

y represents a number from 3 to 20,

and/or

(iv) 0.0001 to 10% by weight (based on the total amount of the compounds employed which have hydrogen atoms which are reactive towards NCO groups) of one or more catalysts

and/or

v) solvents,

the sum of A) + B) + $C_i$) + $C_{ii}$) being 40 to 98 equivalent % and the sum of A) + B) + $C_i$) + $C_{ii}$) + $C_{iii}$) being 50 to 98 equivalent % (in each case based on the NCO groups of the polyisocyanates employed).

2. Process for the preparation of polyisocyanate polyaddition compounds, characterised in that polyisocyanates having 3 to 8 NCO groups per molecule are brought together with

A) 5 to 60 equivalent % (based on the NCO groups of the polyisocyanates employed) of one or more compounds of the formulae

$$R_1\text{-}(\text{-}AO\text{-})_x\text{-}X \qquad (I)$$

and/or

$$R_1\text{-}R_2\text{-}X \quad (II)$$

in which

$R_1$ represents an optionally substituted aliphatic radical having 1 to 60 C atoms, an optionally substituted aromatic or araliphatic radical having 6 to 60 C atoms and/or the radical of a carboxylic acid, a carboxylic acid amide or a sulphonamide, but having 1 to 60 C atoms,

AO represents an alkylene oxide radical having 2 to 22 C atoms,

x represents a number from 2 to 100,

X represents an HO, HS, $H_2N$ or HRN group where R = $C_1$-$C_6$-alkyl, and

$R_2$ represents an aliphatic polyester radical having a molecular weight in the range from 200 to 10,000,

B) 20 to 80 equivalent % (based on the NCO groups of the polyisocyanates employed) of a tertiary amine having 3 to 20 C atoms, which additionally contains an HO, HS, $H_2N$ or HRN group, where R = $C_1$-$C_6$-alkyl, and

C) if appropriate further components,

the sum of A) + B) being 40 to 98 equivalent % (based on the NCO groups of the polyisocyanates employed), and the components are allowed to react with one another at temperatures in the range from 20 to 250°C.

3. Use of polyisocyanate polyaddition compounds of Claim 1 or prepared according to Claim 2 as wetting or dispersing agents for incorporation of solids into varnish and/or plastics formulations.

4. Use of polyisocyanate polyaddition compounds of Claim 1 or prepared according to Claim 2 for surface modification of solids before incorporation thereof into dispersions.

5. Use according to Claims 3 and 4, characterised in that the solids are pigments or fillers and 0.1 to 20% by weight of the polyisocyanate polyaddition compounds (based on the solids to be dispersed) is employed.